# FASCICULE DE BREVET EUROPEEN

(11) **EP 0 770 507 B1**
(45) Date de publication et mention de la délivrance du brevet: **21.11.2001**
(21) Numéro de dépôt: 96116413.4
(22) Date de dépôt: 14.10.1996
(51) Int. Cl.: B60H 1/00

(54) **Dispositif de chauffage-climatisation de l'habitacle d'un véhicule automobile à moteur électrique**
Vorrichtung zur Beheizung/Klimatisierung eines Innenraumes von einem Fahrzeug mit Elektromotor
Device for heating/air-conditioning the interior of electrically driven motor vehicle

(30) Priorité: 26.10.1995 FR 9512650
(43) Date de publication de la demande: 02.05.1997
(73) Titulaire: VALEO CLIMATISATION, 78321 La Verrière (FR)
(72) Inventeur: Pomme, Vincent, 78180 Montigny-Le-Bretonneux (FR)

(56) Documents cités:
- DE-A- 4 238 364
- DE-C- 4 327 261
- GB-A- 2 118 713
- US-A- 5 341 868

## Description

L'invention concerne un dispositif de chauffage-climatisation de l'habitacle d'un véhicule automobile à moteur électrique.

Elle concerne plus particulièrement un dispositif du type comprenant un circuit de circulation d'un fluide frigorigène comportant une boucle principale contenant un échangeur de chaleur intérieur propre à échanger de la chaleur avec un flux d'air envoyé dans l'habitacle, un échangeur de chaleur extérieur propre à échanger de la chaleur avec un flux d'air extérieur à l'habitacle et un détendeur interposé entre l'échangeur de chaleur intérieur et l'échangeur de chaleur extérieur; une boucle secondaire contenant un compresseur; et des moyens de commutation entre la boucle principale et la boucle secondaire pour faire circuler le fluide frigorigène dans la boucle principale dans un sens de circulation choisi.

Dans un dispositif de ce type, le fluide frigorigène peut circuler dans la boucle principale dans un premier sens de circulation, grâce auquel l'échangeur de chaleur intérieur et l'échangeur de chaleur extérieur servent respectivement de condenseur et d'évaporateur, ce qui permet d'assurer le chauffage de l'habitacle.

Le fluide frigorigène peut aussi circuler dans la boucle principale dans un second sens de circulation, grâce auquel l'échangeur de chaleur intérieur et l'échangeur de chaleur extérieur servent respectivement d'évaporateur et de condenseur, ce qui permet d'assurer le refroidissement ou la climatisation de l'habitacle.

Un tel dispositif fonctionne suivant le principe d'une pompe à chaleur réversible qui permet, à partir des mêmes composants de base, d'assurer soit le chauffage, soit la climatisation de l'habitacle du véhicule automobile.

Un dispositif ayant les caractéristiques du préambule de la revendication 1 est décrit dans le document US-A-5 341 868.

Aussi bien en mode chauffage qu' en mode climatisation, la circulation du fluide frigorigène s'effectue sous l'action du compresseur, lequel est entraîné à partir des batteries du véhicule.

Or, comme ces batteries alimentent également le moteur électrique servant à la propulsion du véhicule, l'énergie dépensée par le compresseur s'effectue au détriment de l'autonomie du véhicule.

L'invention a notamment pour but de surmonter cet inconvénient.

C'est, en particulier, un but de l'invention de procurer un dispositif de chauffage-climatisation du type défini précédemment, qui permet de minimiser les dépenses d'énergie, que ce soit en mode chauffage ou en mode climatisation.

L'invention propose à cet effet un dispositif de chauffage-climatisation du type défini en introduction, dans lequel la boucle secondaire contient un échangeur de chaleur parcouru par un fluide dont au moins une partie est à l'état gazeux et relié à un circuit de refroidissement du circuit de puissance associé au moteur électrique du véhicule.

En effet, dans un véhicule à moteur électrique, le circuit de puissance associé au moteur électrique, et qui comprend notamment les batteries, dégage une certaine énergie calorifique qui, jusqu'à présent, était généralement dissipée en pure perte dans l'atmosphère.

L'invention permet de récupérer au moins en partie cette énergie calorifique grâce à l'évaporateur contenu dans la boucle secondaire. Cette énergie calorifique est apportée au fluide frigorigène, ce qui est particulièrement intéressant en mode chauffage.

Selon une autre caractéristique de l'invention, les moyens de commutation sont propres à prendre deux positions différentes :
- une position chauffage, dans laquelle le fluide frigorigène provenant du compresseur est envoyé d'abord vers l'échangeur de chaleur intérieur qui joue le rôle de condenseur, traverse ensuite le détendeur, avant d'être envoyé vers l'échangeur de chaleur extérieur qui joue le rôle d'évaporateur; et
- une position climatisation, dans laquelle le fluide frigorigène provenant du compresseur est envoyé d'abord vers l'échangeur de chaleur extérieur qui joue le rôle de condenseur, traverse ensuite le détendeur, avant d'être envoyé vers l'échangeur de chaleur intérieur qui joue le rôle d'évaporateur.

Selon une autre caractéristique de l'invention, une conduite de dérivation contenant une vanne d'arrêt est interposée entre la boucle principale et la boucle secondaire, en sorte que, dans la position chauffage, la vanne d'arrêt est fermée pour que le fluide frigorigène passe obligatoirement au travers de l'évaporateur, tandis que, dans la position climatisation, le fluide frigorigène peut soit contourner l'évaporateur lorsque la vanne d'arrêt est ouverte, soit passer par l'évaporateur lorsque la vanne d'arrêt est fermée.

Ainsi, dans la position chauffage, le fluide frigorigène traverse successivement l'échangeur de chaleur extérieur (servant d'évaporateur) et l'évaporateur de la boucle secondaire.

Par contre, dans la position climatisation, le fluide frigorigène peut contourner l'évaporateur de la boucle secondaire, auquel cas, le fluide circule entre l'échangeur de chaleur intérieur servant d'évaporateur et l'échangeur de chaleur extérieur servant de condenseur.

En variante, le fluide frigorigène peut passer par l'évaporateur de la boucle secondaire, si bien que le fluide traverse successivement l'échangeur de chaleur intérieur servant d'évaporateur puis l'évaporateur de la boucle secondaire.

Dans ce dernier cas, l'évaporateur permet de refroidir le circuit de puissance associé au moteur électrique du véhicule.

Selon une autre caractéristique de l'invention, la conduite de dérivation est reliée, d'une part, à un point de la boucle principale qui est compris entre les moyens de commutation et l'échangeur de chaleur intérieur et, d'autre part, à un point de la boucle secondaire qui est compris entre le compresseur et l'évaporateur.

Un régulateur de pression d'évaporation est avantageusement prévu dans la boucle secondaire entre les moyens de commutation et l'évaporateur, ce qui permet d'éviter le givrage de l'échangeur extérieur dans le mode chauffage du dispositif de chauffage-climatisation.

Les moyens de commutation interposés entre la boucle principale et la boucle secondaire comprennent avantageusement une vanne à quatre voies.

Selon une autre caractéristique de l'invention, l'évaporateur de la boucle secondaire est propre à échanger de la chaleur entre le fluide frigorigène et un fluide, par exemple de l'eau additionnée d'un antigel, servant au refroidissement du circuit de puissance du moteur du véhicule.

L'invention prévoit en outre qu'un réservoir de type bidirectionnel, c'est-à-dire pouvant être traversé par le fluide frigorigène dans un sens ou dans l'autre, est disposé dans la boucle principale entre l'échangeur de chaleur intérieur et le détendeur. Ce réservoir est destiné à absorber les variations de volume du fluide frigorigène.

Selon une autre caractéristique de l'invention, l'échangeur de chaleur extérieur est monté dans une conduite d'extraction de l'air provenant de l'habitacle.

Ainsi, dans le mode chauffage, l'échangeur de chaleur extérieur qui joue le rôle d'évaporateur, peut prélever une partie de l'énergie thermique issue de l'habitacle, qui serait normalement dissipée en pure perte dans l'atmosphère.

L'invention prévoit également que la conduite d'extraction comporte une entrée d'air débouchant à l'intérieur de l'habitacle, une entrée d'air débouchant à l'extérieur de l'habitacle, et contrôlée par un volet et une sortie d'air débouchant à l'extérieur de l'habitacle, et que la conduite d'extraction loge un ventilateur, ce qui permet d'envoyer vers l'échangeur de chaleur extérieur de l'air extrait de l'habitacle ainsi que, le cas échéant, de l'air provenant de l'extérieur de l'habitacle.

Dans la description qui suit, faite seulement à titre d'exemple, on se réfère au dessin annexé, sur lequel :
- la figure 1 est une représentation schématique d'un dispositif de chauffage-climatisation selon l'invention utilisé en mode chauffage; et
- la figure 2 est une vue analogue à celle de la figure 1 dans le mode climatisation.

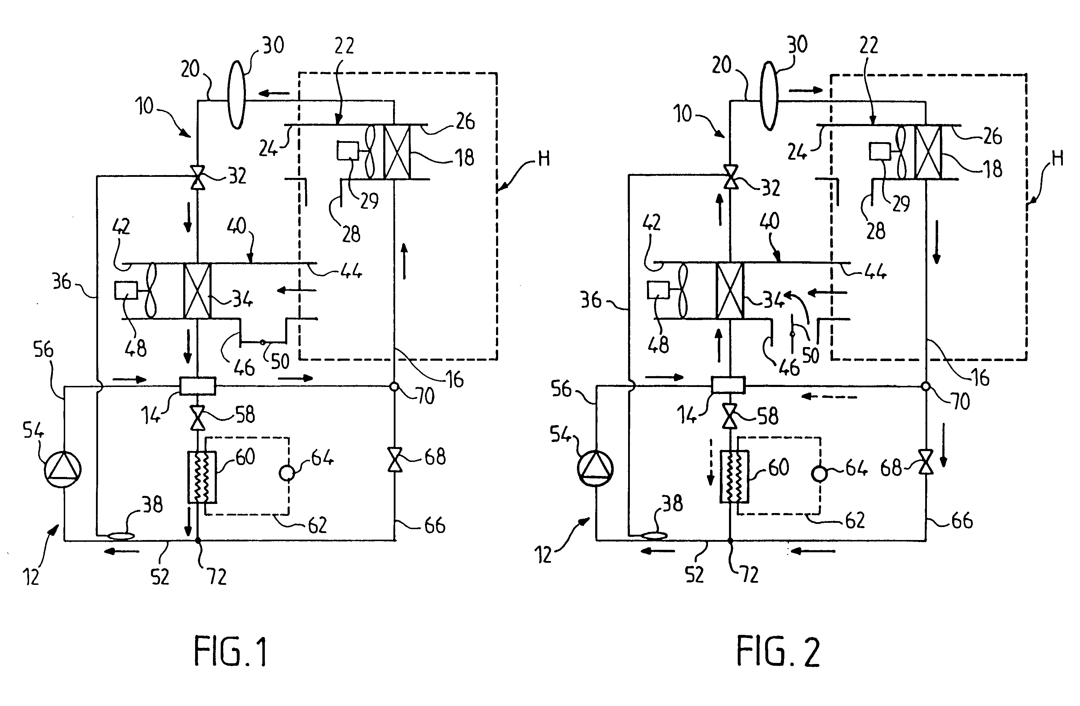

Le dispositif représenté à la figure 1 comprend une boucle principale 10 et une boucle secondaire 12 propres à être parcourues toutes les deux par un fluide frigorigène, ainsi qu'une vanne de commutation 14, du type à quatre voies, reliant les deux boucles entre elles.

La boucle principale 10 comprend un conduit 16 reliant la vanne 14 à un échangeur de chaleur 18 et un conduit 20 reliant l'échangeur de chaleur 18 à la vanne 14.

L'échangeur de chaleur 18 est placé dans une conduite d'air 22 qui présente une entrée d'air 24 et une sortie d'air 26 qui débouchent respectivement à l'extérieur et à l'intérieur de l'habitacle H d'un véhicule automobile. Le contour de l'habitacle est représenté schématiquement par une ligne interrompue. La conduite 22 comprend également une entrée d'air de recirculation 28 qui débouche directement dans l'habitacle. De plus, la conduite 22 loge intérieurement un ventilateur 29 propre à pulser un flux d'air dans l'habitacle H.

Sur le conduit 20 sont placés successivement, à partir de l'échangeur de chaleur 18, un réservoir 30, un détendeur 32 et un échangeur de chaleur extérieur 34.

Le réservoir 30 est un réservoir de type bidirectionnel pouvant être traversé dans un sens ou dans l'autre par le fluide frigorigène et servant à compenser les variations de volume du fluide.

Le détendeur 32 est relié, par l'intermédiaire d'une conduite 36, à un bulbe 38 dont la fonction sera expliquée plus loin.

L'échangeur de chaleur extérieur 34 est monté à l'intérieur d'une conduite d'air 40 qui présente une sortie d'air 42 et une entrée d'air 44 débouchant respectivement à l'extérieur et à l'intérieur de l'habitacle H.

Par ailleurs, la conduite 40 comprend une autre entrée d'air 46 qui débouche vers l'extérieur de l'habitacle et qui est contrôlée par un volet 50. Un ventilateur 48 disposé près de la sortie d'air 42 permet d'aspirer un flux d'air provenant de l'intérieur de l'habitacle ainsi que, le cas échéant, un flux d'air provenant de l'extérieur de l'habitacle, selon que le volet 50 est en position fermée (figure 1) ou en position ouverte (figure 2). Le flux d'air ainsi aspiré est envoyé au travers de l'échangeur de chaleur 34.

La boucle secondaire 12 comprend un conduit 52 qui relie la vanne 14 à un compresseur 54 et un conduit 56 qui relie le compresseur 54 à la vanne 14.

Le conduit 52 contient successivement, à partir de la vanne 14, un régulateur de pression d'évaporation 58 et un évaporateur 60. L'évaporateur 60 est relié à un circuit de refroidissement 62 couplé au circuit de puissance 64 associé au moteur électrique (non représenté) assurant la propulsion du véhicule automobile sur lequel est monté le dispositif de l'invention.

Le circuit de puissance 64 comprend les différents organes électriques et/ou électroniques associés au moteur électrique du véhicule et qui dégagent de l'énergie thermique, notamment les batteries du véhicule.

L'échangeur de chaleur 60 permet ainsi d'échanger de la chaleur entre le circuit de refroidissement 62 et le circuit de circulation du fluide frigorigène dans la boucle secondaire 12. Autrement dit, l'évaporateur 60 permet d'absorber au moins en partie l'énergie thermique du circuit de refroidissement 62 pour la restituer au fluide frigorigène parcourant la boucle secondaire 12.

Le bulbe 38 associé au détendeur 32 est disposé du côté aspiration du compresseur 54 pour capter la valeur de température à l'aspiration et réguler en conséquence le débit de fluide au travers du détendeur 32.

Le dispositif comprend en outre une conduite de dérivation 66 sur laquelle est montée une vanne d'arrêt 68 réalisée sous la forme d'une électrovanne. La conduite de dérivation 66 est reliée, d'une part à un point 70 de la boucle principale 10 qui est compris entre la vanne de commutation 14 et l'échangeur de chaleur intérieur 18 et, d'autre part, à un point 72 de la boucle secondaire 12, qui est compris entre le compresseur 54 et l'évaporateur 60.

Dans le mode chauffage de la figure 1, la vanne 14 occupe une position chauffage qui permet au fluide frigorigène de circuler dans la boucle principale 10 et dans la boucle secondaire 12 dans le sens indiqué par les flèches. Le fluide frigorigène à l'état gazeux est comprimé par le compresseur 54 puis envoyé vers l'échangeur de chaleur interne 18 qui joue le rôle de condenseur. Le fluide frigorigène ainsi condensé quitte le condenseur 18, traverse le réservoir 30, est détendu dans le détendeur 32 et traverse ensuite l'échangeur de chaleur externe 34 qui joue le rôle d'évaporateur.

Le fluide frigorigène est partiellement évaporé dans l'échangeur de chaleur 34 par l'énergie thermique extraite de l'habitacle H. Il est ensuite évaporé complètement dans l'évaporateur 60 par échange thermique avec le liquide de refroidissement parcourant le circuit de refroidissement 62.

Le fluide frigorigène ainsi vaporisé retourne à l'entrée du compresseur 54 avant de continuer un autre cycle. Il est à noter que le bulbe 38 placé à l'entrée du compresseur 54 permet de détecter la température du fluide à l'entrée du compresseur 54 et d'agir sur le détendeur 32.

Par ailleurs, le régulateur de pression d'évaporation 58 est réglé de telle manière que la température de l'air en sortie de l'échangeur de chaleur 34 soit maintenue à une valeur suffisamment élevée pour empêcher le givrage.

Dans le mode de fonctionnement chauffage, l'électrovanne 68 est fermée, ce qui rend la conduite de dérivation 66 totalement inopérante.

Dans ce mode chauffage, l'évaporateur 34 récupère l'énergie calorifique de l'air d'extraction de l'habitacle et l'évaporateur 60 récupère l'énergie calorifique du circuit de puissance associé au moteur électrique du véhicule. L'énergie ainsi récupérée et véhiculée par le fluide frigorigène est ensuite restituée dans l'habitacle H par l'échangeur de chaleur interne 18 qui sert de condenseur.

Dans le mode climatisation représenté à la figure 2, la vanne de commutation 14 occupe une autre position, ou position climatisation.

Le fluide frigorigène à l'état gazeux envoyé par le compresseur 54 est dirigé, par la vanne 14, directement vers l'échangeur de chaleur extérieur 34 qui joue ici le rôle de condenseur. De là, le fluide ainsi condensé traverse le détendeur 32, puis le réservoir 30, avant de gagner l'échangeur de chaleur intérieur 18 qui joue ici le rôle d'évaporateur. Le fluide frigorigène est vaporisé dans l'échangeur de chaleur 18 et est retourné ensuite au compresseur 54 de deux manières différentes.

Dans un premier mode de fonctionnement, la vanne 68 est ouverte et le fluide frigorigène à l'état gazeux, qui quitte le point 70, gagne ensuite le compresseur 54 en passant par la conduite de dérivation 66, comme montré par les flèches. Il en résulte que le fluide frigorigène ne traverse pas l'évaporateur 60. Ainsi, le fluide frigorigène est condensé dans l'échangeur de chaleur extérieur 34 en dégageant de la chaleur évacuée dans le milieu extérieur puis est ensuite évaporé dans l'échangeur de chaleur intérieur 18 jouant le rôle d'évaporateur. Il en résulte que le flux d'air qui est envoyé à l'intérieur de l'habitacle sous l'action du ventilateur 29 est préalablement refroidi par échange thermique dans l'échangeur 18.

Dans un second mode de fonctionnement, l'électrovanne 68 est fermée, ce qui rend la conduite de dérivation 66 inopérante. Dans ce mode de fonctionnement, le fluide frigorigène quittant le point 70 est envoyé directement à la vanne 14, comme montré par la flèche en trait interrompu, puis gagne ensuite le compresseur 54 en traversant successivement le régulateur 58 et l'évaporateur 60, comme indiqué également par la flèche en trait interrompu. Ainsi, dans cette dernière possibilité, le fluide frigorigène permet de refroidir le circuit de puissance associé au moteur du véhicule, notamment les batteries, ce qui permet d'accroître l'autonomie du véhicule. Par contre, ce mode de fonctionnement entraîne une certaine perte de charge, puisque le fluide frigorigène doit traverser l'évaporateur 60.

C'est la raison pour laquelle il peut être intéressant, dans certains cas, de contourner l'évaporateur 60, lorsque l'électrovanne 68 est dans sa position ouverte.

Bien entendu, l'invention n'est pas limitée à la forme de réalisation décrite précédemment à titre d'exemple et s'étend à d'autres variantes.

Le dispositif de l'invention permet d'optimiser le fonctionnement en mode chauffage et en mode climatisation en minimisant la consommation des batteries du véhicule automobile à moteur électrique, sur lequel le dispositif est installé.

## Revendications

1. Dispositif de chauffage-climatisation de l'habitacle d'un véhicule automobile à moteur électrique, du type comprenant un circuit de circulation d'un fluide frigorigène comportant une boucle principale (10) contenant un échangeur de chaleur intérieur (18) propre à échanger de la chaleur avec un flux d'air envoyé dans l'habitacle (H), un échangeur extérieur (34) propre à échanger de la chaleur avec un flux d'air extérieur à l'habitacle et un détendeur (32) interposé entre l'échangeur de chaleur intérieur (18) et l'échangeur de chaleur extérieur (34); une boucle secondaire (12) contenant un compresseur (54); et des moyens de commutation (14) entre la boucle principale (10) et la boucle secondaire (12) pour faire circuler le fluide frigorigène dans la boucle principale (10) dans un sens de circulation choisi,
**caractérisé en ce que** la boucle secondaire (12) contient un échangeur de chaleur (60) parcouru par un fluide dont au moins une partie est à l'état gazeux et relié à un circuit (62) de refroidissement du circuit de puissance (64) associé au moteur électrique du véhicule.

2. Dispositif selon la revendication 1, **caractérisé en ce que** les moyens de commutation (14) sont propres à prendre deux positions différentes
- une position chauffage, dans laquelle le fluide frigorigène provenant du compresseur (54) est envoyé d'abord vers l'échangeur de chaleur intérieur (18) qui joue le rôle de condenseur, traverse ensuite le détendeur (32), avant d'être envoyé vers l'échangeur de chaleur extérieur (34) qui le joue le rôle d'évaporateur ; et
- une position climatisation, dans laquelle le fluide frigorigène provenant du compresseur (54) est envoyé d'abord vers l'échangeur de chaleur extérieur (34) qui joue le rôle de condenseur, traverse ensuite le détendeur (32), avant d'être envoyé vers l'échangeur de chaleur intérieur (18) qui joue le rôle d'évaporateur.

3. Dispositif selon la revendication 2, **caractérisé en ce qu'**une conduite de dérivation (66) contenant une vanne d'arrêt (68) est interposée entre la boucle principale (10) et la boucle secondaire (12), en sorte que, dans la position chauffage, la vanne d'arrêt (68) est fermée pour que le fluide frigorigène passe obligatoirement au travers de l'évaporateur (60) et que, dans la position climatisation, le fluide frigorigène peut, soit contourner l'évaporateur (60) lorsque la vanne d'arrêt est ouverte, soit passer par l'évaporateur (60) lorsque la vanne d'arrêt (68) est fermée.

4. Dispositif selon la revendication 3, **caractérisé en ce que** la conduite de dérivation (66) est reliée, d'une part, à un point (70) de la boucle principale (10) qui est compris entre les moyens de commutation (14) et l'échangeur de chaleur intérieur (18) et, d'autre part, à un point (72) de la boucle secondaire (12) qui est compris entre le compresseur (54) et l'évaporateur (60).

5. Dispositif selon l'une des revendications 1 à 4, **caractérisé en ce qu'**un régulateur de pression d'évaporation (58) est prévu dans la boucle secondaire (12) entre les moyens de commutation (14) et l'évaporateur (60).

6. Dispositif selon l'une des revendications 1 à 5, **caractérisé en ce que** les moyens de commutation (14) comprennent une vanne à quatre voies.

7. Dispositif selon l'une des revendications 1 à 6, **caractérisé en ce que** l'évaporateur (60) est propre à échanger de la chaleur entre le fluide frigorigène et un fluide, par exemple de l'eau additionnée d'un antigel, servant au refroidissement du circuit de puissance (64) associé au moteur du véhicule.

8. Dispositif selon l'une des revendications 1 à 7, **caractérisé en ce qu'**un réservoir bidirectionnel (30), propre à être traversé par le fluide frigorigène dans un sens ou dans l'autre, est disposé dans la boucle principale (10) entre l'échangeur de chaleur intérieur (18) et le détendeur (32).

9. Dispositif selon l'une des revendications 1 à 8, **caractérisé en ce que** l'échangeur de chaleur extérieur (34) est monté dans une conduite (40) pour l'extraction de l'air provenant de l'habitacle (H).

10. Dispositif selon la revendication 9, **caractérisé en ce que** la conduite d'extraction (40) comporte une entrée d'air (44) débouchant à l'intérieur de l'habitacle, une entrée d'air (46) débouchant à l'extérieur de l'habitacle et contrôlée par un volet (50) et une sortie d'air (42) débouchant à l'extérieur de l'habitacle, et **en ce que** la conduite d'extraction (40) loge un ventilateur (48), ce qui permet d'envoyer vers l'échangeur de chaleur extérieur (34) de l'air extrait de l'habitacle ainsi que, le cas échéant, de l'air provenant de l'extérieur de l'habitacle.

## Patentansprüche

1. Heiz-Klimaanlage für den Innenraum eines Kraftfahrzeuges mit Elektromotor, vom Typ, umfassend einen Kältefluidzirkulationskreis mit einem Hauptkreis (10), der einen Innenwärmetauscher (18) enthält, der einen Wärmeaustausch mit einer Luftströmung bewirken kann, die in den Innenraum H geführt wird, einem Außenwärmetauscher (34), der Wärmeaustausch mit einer Luftströmung äußerlich des Innenraumes bereitstellen kann, und mit einem Druckminderer (32), der zwischen dem Innenwärmetauscher (18) und dem Außenwärmetauscher (34) zwischengelagert ist; einen Sekundärkreis (12), der einen Kompressor (54) enthält; sowie eine Umschalteinrichtung (14) zwischen dem Hauptkreis (10) und dem Sekundärkreis (12), um das Kältefluid in dem Hauptkreis (10) in einer gewählten Zirkulationsrichtung fließen zu lassen, **dadurch gekennzeichnet, dass** der Sekundärkreis (12) einen Wärmetauscher (60) enthält, der von einem Fluid durchlaufen wird, von dem zumindest ein Teil im gasförmigen Zustand vorliegt, und der mit einem Kältekreis (62) des Leistungskreises (64) verbunden ist, der dem Elektromotor des Fahrzeuges zugeordnet ist.

2. Anlage nach Anspruch 1, **dadurch gekennzeichnet, dass** die Umschalteinrichtung (14) in der Lage ist, zwei unterschiedliche Positionen einzunehmen:
- eine Heizposition, in welcher das Kältefluid, welches von dem Kompressor (54) kommt, zuerst zu dem Innenwärmetauscher (18) geführt wird, welcher die Rolle des Kondensators spielt, anschließend den Druckminderer (32) durchquert, bevor es hin zu dem Außenwärmetauscher (34) geführt oder gerichtet wird, der die Rolle des Verdampfers spielt; und
- eine Klimaposition, in welcher das Kältefluid, von dem Kompressor (54) kommend, zuerst zu dem Außenwärmetauscher (34) geführt wird, welcher die Rolle des Kondensators spielt, anschließend den Druckminderer (32) durchquert, bevor es hin zu dem Innenwärmetauscher (18) geführt oder gerichtet wird, welcher die Rolle des Verdampfers spielt.

3. Anlage nach Anspruch 2, **dadurch gekennzeichnet, dass** eine Umlenkleitung (66), die ein Sperrventil (68) enthält, zwischen dem Hauptkreis (10) und dem Sekundärkreis (12) zwischengeschaltet ist, derart, dass in der Heizposition das Sperrventil (68) geschlossen ist, um das Kältefluid zwingend zu veranlassen, durch den Verdampfer (60) zu treten und derart, dass in der Klimaposition das Kältefluid entweder den Verdampfer (60) umgehen kann, wenn das Sperrventil offen ist, oder durch den Verdampfer (60) treten kann, wenn das Sperrventil (68) geschlossen ist.

4. Anlage nach Anspruch 3, **dadurch gekennzeichnet, dass** die Umlenkleitung (66) einerseits mit einem Punkt (70) des Hauptkreises (10) verbunden ist, welcher enthalten ist zwischen der Umschalteinrichtung (14) und dem Innenwärmetauscher (18), und andererseits mit einem Punkt (72) des Sekundärkreises (12), welcher enthalten ist zwischen dem Kompressor (54) und dem Verdampfer (60).

5. Anlage nach einem der Ansprüche 1 bis 4, **dadurch gekennzeichnet, dass** ein Verdampfüngsdruckregler (58) in dem Sekundärkreis (12) zwischen der Umschalteinrichtung (14) und dem Verdampfer (60) vorgesehen ist.

6. Anlage nach einem der Ansprüche 1 bis 5, **dadurch gekennzeichnet, dass** die Umschalteinrichtung (14) ein Vierwegeventil umfasst.

7. Anlage nach einem der Ansprüche 1 bis 6, **dadurch gekennzeichnet, dass** der Verdampfer (60) Wärme tauschen kann zwischen dem Kältefluid und einem Fluid, zum Beispiel einem mit einem Frostschutzmittel versehenen Wasser, welches zur Kühlung des Leistungskreises (64), der dem Fahrzeugmotor zugeordnet ist, dient.

8. Anlage nach einem der Ansprüche 1 bis 7, **dadurch gekennzeichnet, dass** ein bidirektionales Reservoir (30), welches von dem Kältefluid in der einen Richtung oder der anderen Richtung durchquert werden kann, in dem Hauptkreis (10) zwischen dem Innenwärmetauscher (18) und dem Druckminderer (32) vorgesehen ist.

9. Anlage nach einem der Ansprüche 1 bis 8, **dadurch gekennzeichnet, dass** der Außenwärmetauscher (34) in einem Kanal (40) zur Extraktion von aus dem Innenraum (H) herrührender Luft montiert ist.

10. Anlage nach Anspruch 9, **dadurch gekennzeichnet, dass** der Extraktionskanal (40) einen Lufteintritt (44) umfasst, der im Inneren des Innenraumes mündet, einen Lufteintritt (46), der äußerlich des Innenraumes mündet und durch eine Klappe (50) gesteuert ist, sowie einen Luftaustritt (42), der äußerlich des Innenraumes mündet, und dadurch, dass der Extraktionskanal (40) ein Gebläse (48) enthält, welche es ermöglicht, aus dem Innenraum extrahierte bzw. abgesaugte Luft, sowie anderenfalls von äußerlich des Innenraums herrührende Luft hin, zu dem Außenwärmetauscher (34) zu richten.

## Claims

1. Device for heating/air conditioning the passenger compartment of a motor vehicle with an electric motor, of the type comprising a refrigeration fluid circulation circuit having a main loop (10) containing an internal heat exchanger (18) able to exchange heat with an air flow sent into the passenger compartment (H), an external exchanger (34) able to exchange heat with an air flow external to the passenger compartment and a pressure reducing valve (32) interposed between the internal heat exchanger (18) and the external heat exchanger (34); a secondary loop (12) containing a compressor (54); and means (14) of switching between the main loop (10) and the secondary loop (12) in order to cause the refrigeration fluid to circulate in the main loop (10) in a chosen circulation direction,
**characterised in that** the secondary loop (12) contains a heat exchanger (60) with a fluid running through it, at least part of which is in the gaseous state, and connected to a cooling circuit (62) for the power circuit (64) associated with the electric motor of the vehicle.

2. Device according to Claim 1, **characterised in that** the switching means (14) are able to take two different positions:
- a heating position, in which the refrigerating fluid coming from the compressor (34) is sent first of all to the internal heat exchanger (18) which fulfils the role of a condenser, and next passes through the pressure reducing valve (32), before being sent to the external heat exchanger (34), which fulfils the role of an evaporator; and
- an air-conditioning position, in which the refrigerating fluid coming from the compressor (54) is sent first of all to the external heat exchanger (34), which fulfils the role of a condenser, and next passes through the pressure reducing valve (32), before being sent to the internal heat exchanger (18), which fulfils the role of an evaporator.

3. Device according to Claim 2, **characterised in that** a bypass pipe (66) containing a stop valve (68) is interposed between the main loop (10) and the secondary loop (12) so that, in the heating position, the stop valve (68) is closed so that the refrigerating fluid necessarily passes through the evaporator (60) and so that, in the air-conditioning position, the refrigerating fluid can either bypass the evaporator (60) when the stop valve is open or pass through the evaporator (60) when the stop valve (68) is closed.

4. Device according to Claim 3, **characterised in that** the bypass pipe (66) is connected on the one hand to a point (70) in the main loop (10) which lies between the switching means (14) and the internal heat exchanger (18) and on the other hand to a point (72) in the secondary loop (12) which lies between the compressor (54) and the evaporator (60).

5. Device according to one of Claims 1 to 4, **characterised in that** an evaporation pressure regulator (58) is provided in the secondary loop (12) between the switching means (14) and the evaporator (60).

6. Device according to one of Claims 1 to 5, **characterised in that** the switching means (14) comprise a four-way valve.

7. Device according to one of Claims 1 to 6, **characterised in that** the evaporator (60) is able to exchange heat between the refrigerating fluid and a fluid, for example water with antifreeze added, used for the cooling of the power circuit (64) associated with the vehicle engine.

8. Device according to one of Claims 1 to 7, **characterised in that** the bidirectional reservoir (30) able to have the refrigerating fluid pass through it in one direction or the other, is disposed in the main loop (10) between the internal heat exchanger (18) and the pressure reducing valve (32).

9. Device according to one of Claims 1 to 8, **characterised in that** the external heat exchanger (34) is mounted in a pipe (40) for extracting air coming from the passenger compartment (H).

10. Device according to Claim 9, **characterised in that** the extraction pipe (40) has an air inlet (44) opening out inside the passenger compartment, an air inlet (46) opening out outside the passenger compartment and controlled by a flap (50) and an air outlet (42) opening out outside the passenger compartment, and **in that** the extraction pipe (40) houses a fan (48), which makes it possible to send, to the external heat exchanger (34), air extracted from the passenger compartment and, where applicable, air coming from outside the passenger compartment.
